## Europäisches Patentamt
## European Patent Office
## Office européen des brevets

(19)

(11) Veröffentlichungsnummer: **0 066 257**
**B1**

(12) **EUROPÄISCHE PATENTSCHRIFT**

(45) Veröffentlichungstag der Patentschrift:
08.08.84

(51) Int. Cl.³: **C 03 B 13/12**, C 03 B 5/193

(21) Anmeldenummer: **82104622.4**

(22) Anmeldetag: **27.05.82**

(54) **Verfahren zur kontinuierlichen Herstellung eines Flachglasbandes und Vorrichtung zur Durchführung des Verfahrens.**

(30) Priorität: **30.05.81 DE 3121615**

(43) Veröffentlichungstag der Anmeldung:
**08.12.82 Patentblatt 82/49**

(45) Bekanntmachung des Hinweises auf die Patenterteilung:
**08.08.84 Patentblatt 84/32**

(84) Benannte Vertragsstaaten:
**AT BE DE FR GB IT SE**

(56) Entgegenhaltungen:
**EP - A - 0 005 307**
**DE - A - 1 957 207**
**DE - A - 1 957 208**
**US - A - 2 909 005**

(73) Patentinhaber: **VEGLA Vereinigte Glaswerke GmbH, Viktoria Allee 3-5, D-5100 Aachen (DE)**

(72) Erfinder: **Kamperhoff, Gerd, Ing. grad., Aloys-Weddelingstrasse 1, D-4370 Marl-Polsum (DE)**

(74) Vertreter: **Biermann, Wilhelm, Dr.-Ing., VEGLA Vereinigte Glaswerke GmbH Viktoriaallee 3-5, D-5100 Aachen (DE)**

## Beschreibung

Die Erfindung betrifft ein Verfahren zur kontinuierlichen Herstellung eines Flachglasbandes, bei dem schmelzflüssiges Glas einem angetriebenen Walzenpaar zugeführt und mit Hilfe des Walzenpaares zu einem Glasband ausgewalzt wird. Sie umfaßt ferner eine Vorrichtung zur Durchführung des Verfahrens.

Das Walzverfahren wird in großem Umfang angewendet zur Herstellung von sogenanntem Gußglas, das heißt von ornamentiertem Flachglas, indem wenigstens eine Walze mit einer mit einem gewünschten Muster gravierten Oberfläche verwendet wird. Mit diesem Verfahren wird üblicherweise ornamentiertes Flachglas mit einem regelmäßigen, wiederkehrenden Muster hergestellt.

Der Erfindung liegt die Aufgabe zugrunde, das bekannte kontinuierliche Gußglasverfahren so abzuwandeln, daß ein Glasband mit einem unregelmäßigen, sich nicht wiederholenden Aussehen entsteht, so daß die aus dem Glasband geschnittenen Glasscheiben jeweils einen individuellen Charakter haben. Die Glasscheiben sollen insbesondere den Charakter eines sogenannten »Antikglases« aufweisen, das heißt mit individuellen Fehlern und Unvollkommenheiten versehen sein.

Das erfindungsgemäße Verfahren besteht darin, daß unmittelbar vor dem Walzenpaar Gasströme mit niedrigerer Temperatur als der Temperatur der Glasschmelze von oben in das schmelzflüssige Glas hineingeblasen werden, derart, daß dadurch in der Glasschmelze geschlossene Glasblasen und Bereiche mit niedrigerer Temperatur erzeugt werden, die im ausgewalzten Glasband Schlieren bilden.

Durch das Einleiten der relativ kalten Gasströme in die Glasschmelze in dem Bereich unmittelbar vor dem Walzenpaar schäumt zum einen das Glas unter Bildung geschlossener Luftblasen auf. Die Luftblasen bleiben zum Teil in der zähflüssigen Glasschmelze, treten mit der Glasmasse durch den Walzenspalt aus und bilden in dem fertigen Glasband bleibende Glasblasen von unterschiedlich großen Durchmessern. Zum andern kühlen die im Vergleich zur Glastemperatur kalten Gasströme das schmelzflüssige Gas ungleichmäßig ab. Da anschließend keine Homogenisierung der Temperatur erfolgt, sondern die kälteren und die heißeren Gasströme inhomogen vermischt dem Walzenspalt zugeführt werden, bleibt diese inhomogene Mischung in Form von Schlieren in dem Glasband erhalten. Ferner führt die inhomogene Temperaturverteilung zu unregelmäßigen Oberflächenunebenheiten, die ebenfalls zu dem interessanten Aussehen des so hergestellten Glasbandes beitragen.

Das erfindungsgemäße Verfahren führt mithin zu einem ähnlichen Produkt, wie es bisher nur in Form von manuell hergestellten Glasscheiben im Handel ist.

In bevorzugter Ausführungsform der Erfindung werden Luftstrahlen mit Raumtemperatur in Form von Preßluft von oben in das schmelzflüssige Glas eingeleitet, und zwar durch in die Glasschmelze eintauchende Düsen.

In Weiterbildung der Erfindung werden die in die Glasschmelze eintauchenden, die Luftstrahlen in die Glasschmelze einleitenden Düsen in unregelmäßiger Weise bewegt. Die Bewegung der Düsen erfolgt in erster Linie quer zur Fließrichtung des Glasstromes und in weiterer Ausgestaltung der Erfindung auch in vertikaler Richtung und in Form einer Schwenkbewegung auch in der Strömungsrichtung der Glasschmelze. Dadurch wird eine noch größere Unregelmäßigkeit des Aussehens der Glasscheiben erreicht.

Eine geeignete Vorrichtung zur Durchführung des neuen Verfahrens ist im Anspruch 11 gekennzeichnet, während die Ansprüche 12 bis 16 weitere Ausgestaltungen dieser Vorrichtung enthalten.

Das erfindungsgemäße Verfahren und die neue Vorrichtung werden nachfolgend anhand der Zeichnungen näher beschrieben, die ein bevorzugtes Ausführungsbeispiel einer solchen Vorrichtung darstellen. In den Zeichnungen zeigt

Fig. 1 die wesentlichen Teile der Herstellungsanlage in Form einer teilweisen im vertikalen Längsschnitt dargestellten Seitenansicht;

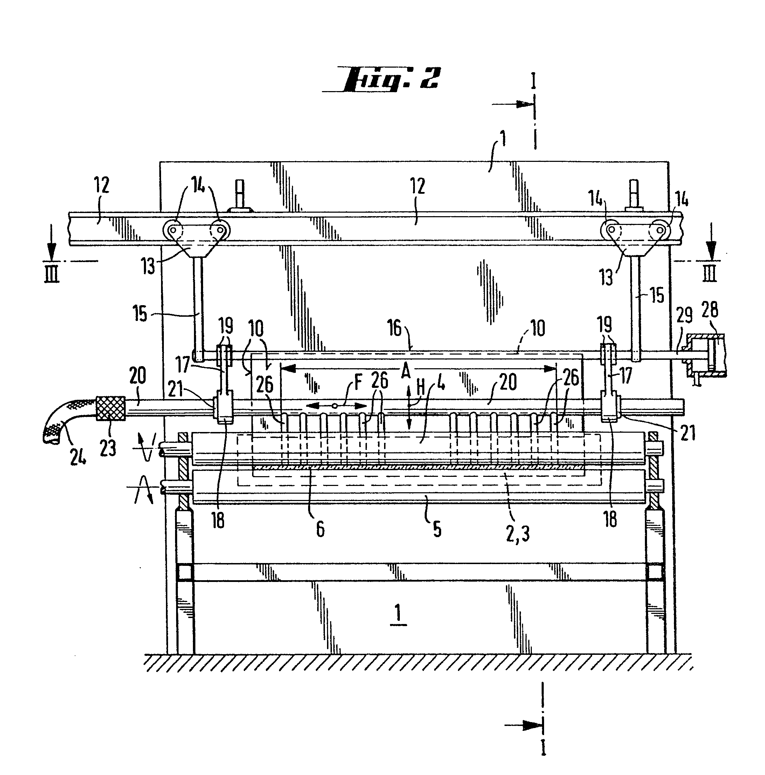

Fig. 2 eine teils im vertikalen Querschnitt dargestellte Ansicht der Herstellungsanlage längs der Linie II-II der Fig. 1, und

Fig. 3 eine Aufsicht auf die Herstellungsanlage längs der Linie III-III in Fig. 1.

Bei dem Glasschmelzofen 1 handelt es sich um einen üblichen Schmelzofen, aus dem das geschmolzene Glas 2 kontinuierlich austritt. Das geschmolzene Glas 2 wird in einem kanalartigen Auslauf 3 dem aus der Oberwalze 4 und der Unterwalze 5 bestehenden Walzenpaar zugeführt. Mit Hilfe dieses Walzenpaares 4, 5 wird ein kontinuierliches Flachglasband 6 hergestellt, das auf einer aus angetriebenen Transportrollen 7 bestehenden Transportbahn einem nicht dargestellten Kühlofen zugeführt wird, in dem es in geregelter Weise langsam gekühlt wird, um das Entstehen von schädlichen Kühlspannungen zu vermeiden. Nach dem Austritt aus dem Kühlofen wird das Glasband in bekannter Weise geschnitten und aufgestapelt.

Am Austrittsende des Glasschmelzofens 1 ist oberhalb der Austrittsöffnung für die Glasschmelze 2 ein sogenannter Vorhangstein 10 angeordnet, der die Austrittsöffnung nach oben begrenzt. Innerhalb des Glasschmelzofens 1 beträgt die Temperatur der Glasschmelze unmittelbar vor dem Vorhangstein 10 etwa 1200 Grad Celcius. Mit dieser Temperatur verläßt die Glasschmelze den Schmelzofen und tritt in den Kanal 3 ein, wo sie sich bis zum Eintritt in den Walzenspalt des Walzenpaares 4, 5 bis auf etwa 1050 Grad Celsius abkühlt. Der Kanal 3 hat von der äußeren Begrenzung der Ofenöffnung bis zum Walzenspalt eine Länge von etwa 500 mm. Beim Austritt des gewalzten Glasbandes aus dem Walzenspalt hat das Glasband eine Temperatur von etwa 1000 Grad Celsius, und erreicht beim Eintritt in den Kühlofen eine Temperatur von etwa 650 bis 600 Grad Celsius.

Die erfindungsgemäße Bearbeitung des Glases erfolgt in dem Bereich des Kanals 3, das heißt zwischen dem Ofenausgang und dem Walzenspalt. Zu diesem Zweck ist oberhalb des Kanals 3 an der nicht dargestellten Metallkonstruktion des Schmelzofens 1 eine Schiene 12 angeordnet, entlang derer zwei Wagen 13 verfahrbar sind. Die Wagen 13 mit den Laufrädern 14 tragen jeweils eine sich senkrecht nach unten erstreckende Stütze 15, die durch eine Stange 16 miteinander verbunden sind. Auf der Stange 16 liegen zwei Halterungen 17 lose auf, die gegen eine Verschiebung in Längsrichtung der Stange 16 durch auf der Stange 16 fest angeordnete Bundringe 19 gesichert sind. Die Halterungen 17 tragen an ihren unteren Enden Lagerbuchsen 18, in denen das Rohr 20 drehbar gelagert ist. Das Rohr 20 ist gegen Verschiebung in Längsrichtung innerhalb der Lagerbuchsen 18 durch Bundringe 21 gesichert. Die Halterungen 17 gestatten durch Langlöcher eine Verschiebung des Rohres 20 in vertikaler Richtung, d. h. in Richtung des Doppelpfeiles H. Ferner erlaubt die Lagerung der Halterungen 17 auf der Stange 16 eine Verschwenkung der Halterungen 17 um die Stange 16 in Richtung des Doppelpfeiles G. Die Hubbewegungen in Richtung des Doppelpfeiles H und die Schwenkbewegungen in Richtung des Doppelpfeiles G können manuell vorgenommen werden, indem das Rohr 20 entsprechend von Hand bewegt wird. Selbstverständlich ist es aber auch möglich, entsprechende mechanische Antriebsvorrichtungen vorzusehen, die die gewünschten Bewegungen des Rohres 20 ausführen.

Die Hin- und Herbewegung des Rohres 20 in seiner Längsrichtung (Doppelpfeil F) durch Verfahren der Wagen 13 entlang der Schiene 12 kann ebenfalls von Hand vorgenommen werden. In dem dargestellten Ausführungsbeispiel erfolgt sie jedoch durch den Antriebszylinder 28, der über die Kolbenstange 29 auf die Stütze 15 und die Stange 16 einwirkt. Die Steuerung des Antriebszylinders 28 erfolgt nach einem gewünschten Programm.

Mit Hilfe der Muffe 23 ist an das Rohr 20 ein flexibler Schlauch 24 angeschlossen, der zu einer Preßluftquelle führt. Entlang dem Rohr 20 sind zwei Reihen von Düsenrohren 26 von beispielsweise 60 mm Länge und 5 mm Innendurchmesser angeordnet. In Längsrichtung des Rohres 20 gesehen haben die Düsenrohre 26 einen gegenseitigen Abstand von etwa 60 mm. Die einzelnen Düsenrohre 26 der beiden Reihen liegen in Fließrichtung des geschmolzenen Glases gesehen hintereinander, und die jeweils zusammengehörenden Düsenrohre schließen einen Winkel von etwa 40 Grad ein. Die Düsenrohre 26 bestehen aus hochhitzebeständigem Stahl und tauchen etwa 20 bis 30 mm tief in die Glasschmelze ein. Bei einer Breite des Kanals 3 von etwa 200 cm kann der Abstand A zwischen den beiden äußersten Düsenrohren 26 etwa 150 cm betragen, so daß der Hub des Rohres 20 maximal etwa 50 cm beträgt. In vielen Fällen genügt jedoch eine Hubbewegung des Rohres 20 um etwa 10 bis 20 cm.

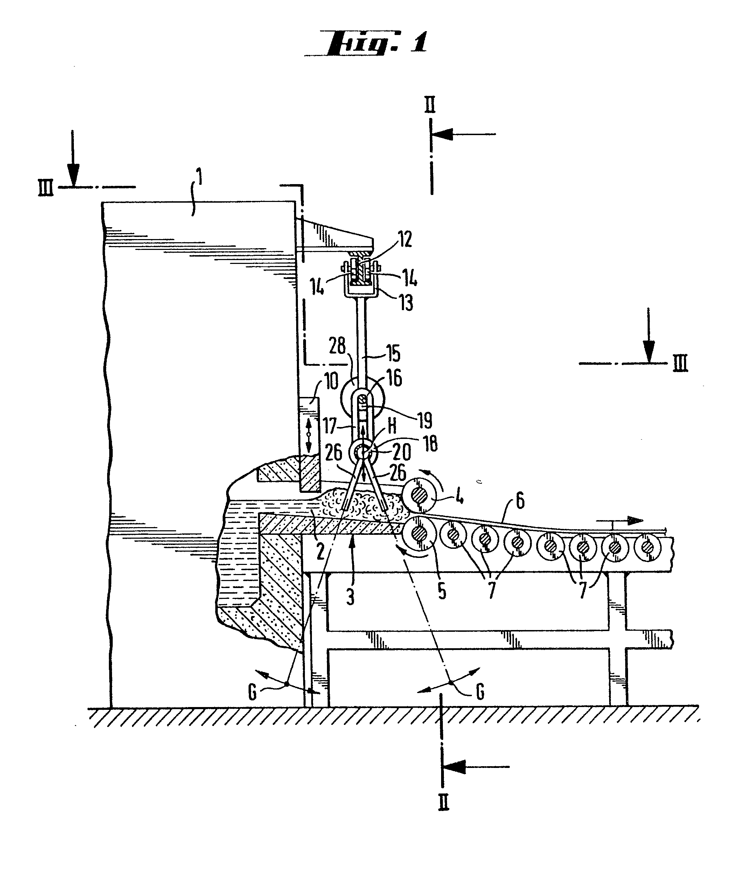

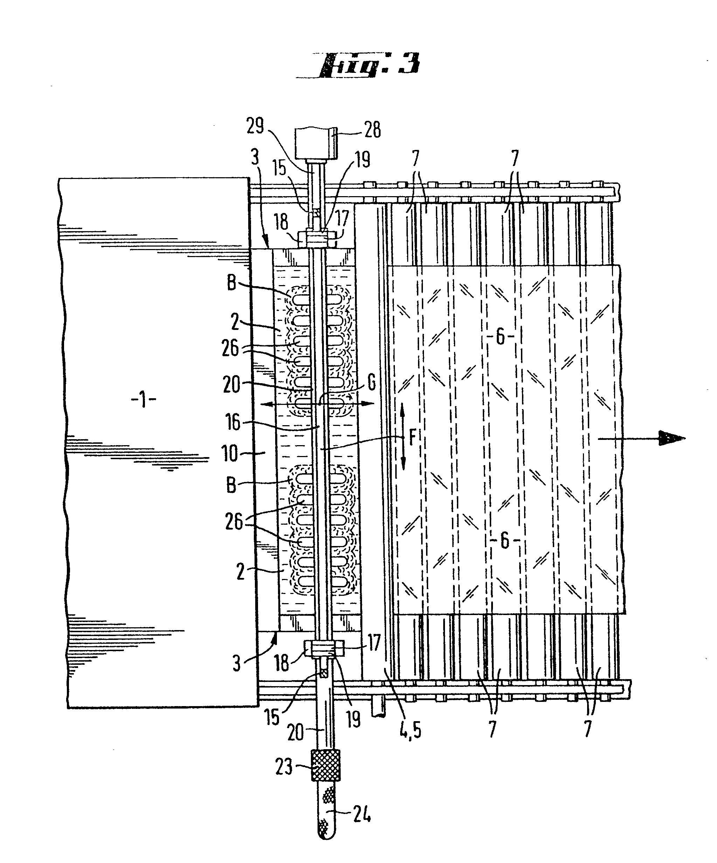

Durch den Schlauch 24 wird Druckluft von Raumtemperatur durch ein nicht dargestelltes Ventil in einer solchen Menge dem Rohr 20 zugeführt, daß etwa 50 $Nm^3$/h durch die Düsenrohre 26 in die Glasschmelze eindringen. In der Umgebung jedes Düsenrohres 26 schäumt die Glasschmelze durch die eingeblasene Luft auf, und es bilden sich um jedes Düsenrohr 26 herum mit B bezeichnete Bereiche (Fig. 3), in denen die Glasschmelze mit Luftblasen angereichert und gleichzeitig abgekühlt wird. Durch Bewegung des Rohres einmal in Richtung des Doppelpfeiles F, und zum anderen durch die Schwenkbewegung des Rohres 20 entsprechend dem Doppelpfeil G (Fig. 1) und ggf. durch eine zusätzliche vertikale Hubbewegung in Richtung des Doppelpfeils H kann man in gezielter regelmäßiger oder unregelmäßiger Weise die Stellen der unmittelbaren Beeinflussung der Glasschmelze durch die aus den Düsenrohren austretenden Luftstrahlen in der gewünschten Weise laufend verändern, wodurch das Aussehen des gebildeten Glasbandes sich gezielt verändern läßt. Je größer die Unruhe ist, die durch die eingeblasene Luft und durch die Bewegung des Rohres 20 in dem schmelzflüssigen Glas vor dem Walzenpaar 4, 5 erzeugt wird, desto variabler ist das Muster bzw. das Aussehen des Glasbandes.

**Patentansprüche**

1. Verfahren zur kontinuierlichen Herstellung eines Flachglasbandes, bei dem schmelzflüssiges Glas einem angetriebenen Walzenpaar zugeführt und mit Hilfe des Walzenpaares (4, 5) zu einem Glasband (6) ausgewalzt wird, dadurch gekennzeichnet, daß unmittelbar vor dem Walzenpaar (4, 5) Gasströme mit niedrigerer Temperatur als der Temperatur der Glasschmelze von oben in das schmelzflüssige Glas hineingeblasen werden, derart, daß in der Glasschmelze geschlossene Gasblasen und Bereiche mit niedrigerer Temperatur erzeugt werden, die im ausgewalzten Glasband (6) Schlieren bilden.

2. Verfahren nach Anspruch 1, dadurch gekennzeichnet, daß in die Glasschmelze Luftströme mit Raumtemperatur eingeblasen werden.

3. Verfahren nach Anspruch 1 und 2, dadurch gekennzeichnet, daß die Luftströme mit Hilfe von von oben in das schmelzflüssige Glas eintauchenden Düsen (26) eingeblasen werden.

4. Verfahren nach Anspruch 1 bis 3, dadurch gekennzeichnet, daß die Stellen, an denen die Gas- bzw. Luftströme in die Schmelze eingeleitet werden, ständig geändert werden.

5. Verfahren nach Anspruch 1 bis 4, dadurch gekennzeichnet, daß die Düsen (26) parallel zu den Walzenachsen bewegt werden.

6. Verfahren nach Anspruch 1 bis 5, dadurch gekennzeichnet, daß den Düsen (26) eine Schwenkbewegung um eine parallel zu den Walzenachsen verlaufende Schwenkachse erteilt wird.

7. Verfahren nach Anspruch 1 bis 6, dadurch gekennzeichnet, daß den Düsen (26) eine Hubbewegung in senkrechter Richtung erteilt wird.

8. Verfahren nach Anspruch 5 bis 7, dadurch gekennzeichnet, daß die Bewegung der Düsen in unregelmäßiger Weise erfolgt.

9. Verfahren nach Anspruch 1 bis 8, dadurch gekennzeichnet, daß das Glasband (6) mit einer eine geprägte Oberfläche aufweisenden Walze ausgewalzt wird.

10. Verfahren nach Anspruch 1 bis 8, dadurch gekennzeichnet, daß das Glasband mit Walzen mit glatter Oberfläche ausgewalzt wird.

11. Vorrichtung zur Durchführung des Verfahrens nach Anspruch 1, mit einem angetriebenen Walzenpaar (4, 5) und einem dem Walzenpaar (4, 5) schmelzflüssiges Glas zuführenden Kanal (3), dadurch gekennzeichnet, daß oberhalb des Kanals (3) unmittelbar vor dem Walzenpaar (4, 5) ein mit in das schmelzflüssige Glas (2) eintauchenden Düsenrohren (26) versehenes an eine Druckluftquelle anschließbares Rohr (20) angeordnet ist.

12. Vorrichtung nach Anspruch 11, dadurch gekennzeichnet, daß das Rohr (20) in horizontaler Richtung parallel zu dem Walzenpaar (4, 5) verfahrbar angeordnet ist.

13. Vorrichtung nach Anspruch 12, dadurch gekennzeichnet, daß das Rohr (20) mit einem dem Rohr (20) eine unregelmäßige Hin- und Herbewegung in horizontaler Richtung erteilenden Antriebsaggregat (28) verbunden ist.

14. Vorrichtung nach Anspruch 11 bis 13, dadurch gekennzeichnet, daß an dem Rohr (20) in Fließrichtung der Glasschmelze gesehen jeweils zwei Düsenrohre (26) hintereinander angeordnet sind.

15. Vorrichtung nach Anspruch 11 bis 14, dadurch gekennzeichnet, daß das Rohr (20) um seine Achse oder um eine parallel hierzu verlaufende Achse drehbar bzw. verschwenkbar angeordnet ist.

16. Vorrichtung nach Anspruch 11 bis 15, dadurch gekennzeichnet, daß das Rohr (20) in vertikaler Richtung verschiebbar angeordnet ist.

## Claims

1. A process for the continuous manufacture of a flat glass strip, in which the melted glass is supplied to a driven pair of rolls and is rolled out with the help of the said pair of rolls (4 and 5) to a glass strip (6), characterized in that directly before the pair of rolls (4 and 5) currents of gas at a lower temperature than the temperature of the melted glass are so blown from above into the melted glass that shut-off bubbles of gas are formed in the melted glass and zones with a lower temperature are formed, same forming streaks in the rolled out glass strip (6).

2. The process as claimed in claim 1 characterized in that air currents at room temperature are blown into the melted glass.

3. The process as claimed in claim 1 and claim 2 characterized in that the air currents are blown using nozzles (26) dipping from above into the melted glass.

4. The process as claimed in any one of claims 1 to 3 characterized in that the points at which the gas or air currents are run into the melted glass are continuously changed.

5. The process as claimed in any one of claims 1 to 4 characterized in that the nozzles (26) are moved so as to be kept parallel to the axes of the rolls.

6. The process as claimed in any one of claims 1 to 5 characterized in that the nozzles (26) are moved so as to be rocked about an axis of rocking that is generally parallel to the axes of the rolls.

7. The process as claimed in any one of claims 1 to 6, characterized in that the nozzles (26) are moved in an upright direction.

8. The process as claimed in any one of claims 5 to 7 characterized in that the motion of the nozzles takes place irregularly.

9. The process as claimed in any one of claims 1 to 8, characterized in that the glass strip (6) is rolled out using a roll with an embossed surface.

10. The process as claimed in any one of claims 1 to 8, characterized in that the said glass strip is rolled out with rolls having a smooth surface.

11. An apparatus for undertaking the process as claimed in claim 1 comprising a driven pair of rolls (4 and 5) and a duct (3) supplying melted glass to the pair of rolls (4 and 5), characterized in that over the duct (3) directly upstream from the pair of rolls (4 and 5) there is a pipe (20) having nozzle tubes (26) dipping into the melted glass (2), said pipe (20) being able to be joined up with a supply of compressed air.

12. The apparatus as claimed in claim 11 characterized in that the said pipe (2) is placed so as to be able to be moved on the level and parallel to the pair of rolls (4 and 5).

13. The apparatus as claimed in claim 12 characterized in that the pipe (20) is joined up with a drive unit (28) for moving the pipe (20) irregularly backwards and forwards on the level.

14. The apparatus as claimed in any one of claims 11 to 13 characterized in that there are two nozzle pipes (26) placed on the pipe (20) so as to be one in front of the other in the direction of flow of the melted glass.

15. The apparatus as claimed in any one of claims 11 to 14 characterized in that the pipe (20) is placed so that it may be turned or rocked about its own axis or about an axis that is parallel thereto.

16. The apparatus as claimed in any one of claims 11 to 15 characterized in the pipe (20) is placed so that it may be moved in an upright direction.

## Revendications

1. Procédé pour fabriquer en continu une bande de verre plat, dans lequel du verre fondu est amené à une paire de cylindres entraînés et est laminé au moyen de cette paire de cylindres (4, 5) en une bande de verre (6), caractérisé en ce que, immédiatement en amont de la paire de cylindres (4, 5), des jets de gaz à température inférieure à celle de la masse de verre fondu sont insufflés du haut dans le verre fondu d'une manière telle que des bulles de gaz occlus soient formées dans le verre fondu de même que des zones à température moins élevée qui forment des stries dans la bande de verre laminé (6).

2. Procédé suivant la revendication 1, caractérisé en ce que des jets d'air à température ambiante sont insufflés dans la masse de verre fondu.

3. Procédé suivant les revendications 1 et 2, caractérisé en ce que les jets d'air sont insufflés à l'aide de lances (26) plongeant du haut dans le verre fondu..

4. Procédé suivant les revendications 1 à 3, caractérisé en ce que les endroits où les jets de gaz ou d'air sont introduits dans la masse de matière fondue, sont modifiés de manière continue.

5. Procédé suivant les revendications 1 à 4, caractérisé en ce que les lances (26) sont déplacées parallèlement aux axes des cylindres.

6. Procédé suivant l'une quelconque des revendications 1 à 5, caractérisé en ce que les lances (26) sont animées d'un mouvement de pivotement autour d'un axe de pivotement s'étendant parallèlement aux axes de cylindres.

7. Procédé suivant l'une quelconque des revendications 1 à 6, caractérisé en ce qu'un mouvement de levée dans le sens vertical est communiqué aux lances (26).

8. Procédé suivant l'une quelconque des revendications 5 à 7, caractérisé en ce que le déplacement des lances s'effectue d'une manière irrégulière.

9. Procédé suivant l'une quelconque des revendications 1 à 8, caractérisé en ce que la bande de verre (6) est laminée au moyen d'un cylindre présentant une surface gravée.

10. Procédé suivant l'une quelconque des revendications 1 à 8, caractérisé en ce que la bande de verre est laminée au moyen de cylindres à surface lisse.

11. Dispositif pour exécuter le procédé suivant la revendication 1 comportant une paire de cylindres entraînés (4, 5) et un canal (3) amenant du verre fondu à la paire de cylindres (4, 5), caractérisé en ce que, au-dessus du canal (3) immédiatement en amont de la paire de cylindres (4, 5), est prévu un tube (20) pouvant être raccordé à une source d'air comprimé et pourvu de lances (26) plongeant dans le verre fondu (2).

12. Dispositif suivant la revendication 11, caractérisé en ce que le tube (20) est monté déplaçable dans un sens horizontal parallèle à la paire de cylindres (4, 5).

13. Dispositif suivant la revendication 12, caractérisé en ce que le tube (20) est relié à un dispositif d'entraînement (28) communiquant au tube (20) un mouvement de va-et-vient irrégulier dans le sens horizontal.

14. Dispositif suivant les revendications 11 à 13, caractérisé en ce que deux lances (26) sont disposées chaque fois l'une derrière l'autre, vues au niveau du tube (20) dans le sens d'écoulement de la masse de verre fondu.

15. Dispositif suivant l'une quelconque des revendications 11 à 14, caractérisé en ce que le tube (20) est monté de manière à pouvoir tourner ou pivoter autour de son axe ou d'un axe parallèle.

16. Dispositif suivant les revendications 11 à 15, caractérisé en ce que le tube (20) est monté déplaçable dans le sens vertical.

## Fig. 1

Fig. 2

Fig. 3